**Europäisches Patentamt**

**European Patent Office**

**Office européen des brevets**

(19)

(11) **EP 1 640 595 A1**

(12) **EUROPÄISCHE PATENTANMELDUNG**

(43) Veröffentlichungstag:
29.03.2006 Patentblatt 2006/13

(21) Anmeldenummer: 04104583.2

(22) Anmeldetag: 22.09.2004

(51) Int Cl.:
*F02M 25/07* (2006.01)    *F02B 37/007* (2006.01)
*F02B 37/24* (2006.01)    *F02B 37/18* (2006.01)
*F02B 37/22* (2006.01)    *F02B 37/16* (2006.01)
*F02D 9/02* (2006.01)

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **Ford Global Technologies, LLC, A subsidary of Ford**
**Motor Company**
**Dearborn, MI 48126 (US)**

(72) Erfinder:
• **Schorn, Norbert**
**52080, Aachen (DE)**
• **Kindl, Matthias**
**52066, Aachen (DE)**

• **Spaeder, Uwe**
**52066, Aachen (DE)**
• **Stalman, Rob**
**52538, Selfkant (DE)**

(74) Vertreter: **Dörfler, Thomas**
**Ford-Werke Aktiengesellschaft**
**Abt. NH-364**
**Henry-Ford-Strasse 1**
**50735 Köln (DE)**

Bemerkungen:
Geänderte Patentansprüche gemäss Regel 86 (2) EPÜ.

(54) **Aufgeladene Brennkraftmaschine und Verfahren zum Betreiben einer derartigen Brennkraftmaschine**

(57) Die Erfindung betrifft eine aufgeladene Brennkraftmaschine (1) mit mindestens zwei Zylindern (3), die in der Art konfiguriert sind, daß sie zwei Gruppen (3',3'') mit jeweils mindestens einem Zylinder (3) bilden und beide Zylindergruppen (3',3'') jeweils mit einer separaten Abgasleitung (4',4'') ausgestattet sind und beide Abgasleitungen (4',4'') miteinander in Verbindung (4) stehen, und mit zwei parallel geschalteten Abgasturboladern (6,7), wobei eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4'') der zweiten Zylindergruppe (3'') angeordnet ist und die diesen Turbinen (6a,7a) zugeordneten Verdichter (6b,7b) in separaten Ansaugleitungen (2',2'') angeordnet sind, die stromabwärts der Verdichter (6b,7b) zu einer Gesamtansaugleitung (2) zusammenlaufen und zur Versorgung der Brennkraftmaschine (1) mit Frischluft bzw. Frischgemisch dienen. Hierbei ist eine Leitung (9) zur Abgasrückführung (8) vorgesehen, die stromaufwärts einer der beiden Turbinen (6a,7a) aus der dieser Turbine (6a,7a) zugeordneten Abgasleitung (4',4'') abzweigt und in die Gesamtansaugleitung (2) mündet, und Mittel (12), mit denen die Größe des durch eine der beiden Turbinen (7a) geführten Abgasmassenstromes steuerbar ist, so daß diese Turbine (7a) als zuschaltbare Turbine (7a) fungiert.

Fig. 5

EP 1 640 595 A1

**Beschreibung**

Die Erfindung betrifft eine aufgeladene Brennkraftmaschine mit mindestens zwei Zylindern, die in der Art konfiguriert sind, daß sie zwei Gruppen mit jeweils mindestens einem Zylinder bilden und beide Zylindergruppen jeweils mit einer separaten Abgasleitung ausgestattet sind und beide Abgasleitungen miteinander in Verbindung stehen, und mit zwei parallel geschalteten Abgasturboladern, wobei eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist und die diesen Turbinen zugeordneten Verdichter in separaten Ansaugleitungen angeordnet sind, die stromabwärts der Verdichter zu einer Gesamtansaugleitung zusammenlaufen und zur Versorgung der Brennkraftmaschine mit Frischluft bzw. Frischgemisch dienen.

Des weiteren betrifft die Erfindung ein Verfahren zum Betreiben einer aufgeladenen Brennkraftmaschine der oben genannten Art.

Im Rahmen der vorliegenden Erfindung umfaßt der Begriff Brennkraftmaschine sowohl Dieselmotoren als auch Ottomotoren.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozeß benötigte Luft verdichtet wird. Die wirtschaftliche Bedeutung dieser Motoren für die Automobilbauindustrie nimmt weiter ständig zu.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu mechanischen Ladern besteht darin, daß keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum runtergekühlt wird.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck $p_{me}$ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d.h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen. Um die zukünftigen Grenzwerte für Schadstoffemissionen einzuhalten, sind aber darüber hinaus weitere Maßnahmen erforderlich, auf die weiter unten noch im Detail eingegangen werden wird, da insbesondere sie Gegenstand der vorliegenden Erfindung sind. Zunächst sollen aber die grundsätzlichen Probleme bei der Auslegung des Abgasturboladers aufgezeigt werden, die bei sämtlichen anderen Maßnahmen mit in Betracht zu ziehen sind.

Schwierigkeiten bereitet die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Dieser Effekt ist unerwünscht, da der Fahrer im Vergleich mit einem nicht aufgeladenen Motor gleicher Maximalleistung auch im unteren Drehzahlbereich ein entsprechend großes Drehmoment erwartet. Das sogenannte Turboloch bei niedrigen Drehzahlen zählt daher auch zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, daß ein möglichst kleiner Abgasturbolader d.h. ein Abgasturbolader mit einem möglichst kleinen Turbinenquerschnitt eingesetzt wird. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d.h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber - wie bereits oben angesprochen - den Nachteil, daß das Aufladeverhalten bei höheren Drehzahlen unzureichend ist.

Grundsätzlich ist auch eine kleine Auslegung des Turbinenquerschnittes zusammen mit einer Ladeluftabblasung möglich, wobei diese Variante aufgrund der energetischen Nachteile der Ladeluftabblasung d. h. der Verschlechterung des effektiven Wirkungsgrades selten zum Einsatz kommt, und die vorhandenen Verdichter an ihre Fördergrenze geraten können und somit die gewünschte Leistung nicht mehr dargestellt werden kann.

Bei Dieselmotoren kann eine kleine Auslegung des Turbinenquerschnittes und die gleichzeitige Begrenzung des Ladedruckes durch Abregelung der Brennstoffmasse bei hohen Drehzahlen zielführend sein. Die Möglichkeiten zur Leistungssteigerung mittels Abgasturboaufladung werden dabei aber nicht voll ausgeschöpft.

Der Abgasturbolader kann aber auch auf hohe Drehzahlen abgestimmt mit einem großen Turbinenquerschnitt ausgelegt werden. Dabei wird das Saugsystem dann in der Weise gestaltet, daß durch Wellenvorgänge bei niedrigen Drehzahlen eine dynamische Aufladung erfolgt. Nachteilig ist dabei der hohe Bauaufwand und das träge Verhalten bei Drehzahländerungen.

Eine Turbine mit variabler Turbinengeometrie gestattet eine Anpassung der Turbinengeometrie bzw. des wirksamen Turbinenquerschnittes an den jeweiligen Betriebspunkt der Brennkraftmaschine, so daß eine Regelung der Turbinengeometrie im Hinblick auf niedrige und hohe Drehzahlen als auch für niedrige und hohe Lasten erfolgen kann.

Die Drehmomentcharakteristik einer aufgeladenen Brennkraftmaschine kann des weiteren durch eine Registeraufladung verbessert werden. Dabei werden mehrere parallel geschaltete Turbolader mit entsprechend kleinen Turbinenquerschnitten mit steigender Last zugeschaltet.

Mehrere parallel geschaltete Turbolader sind hinsichtlich der Verbesserung der Drehmomentcharakteristik auch dann zielführend, wenn sie in der Weise konfiguriert werden, daß die Zylinder der Brennkraftmaschine in zwei Zylindergruppen, die jeweils über eine Abgasleitung verfügen, aufgeteilt werden und jeder der beiden Abgasleitungen bzw. jeder Zylindergruppe ein Abgasturbolader zugeordnet wird. Die Turbine des ersten Abgasturboladers ist dabei in der Abgasleitung der ersten Zylindergruppe angeordnet, während die Turbine des zweiten Abgasturboladers in der Abgasleitung der zweiten Zylindergruppe abgeordnet wird.

Die Verdichter der Abgasturbolader sind korrespondierend zur Anordnung der beiden Turbinen in zwei separaten Ansaugleitungen angeordnet, wobei diese Ansaugleitungen zu einer Gesamtansaugleitung zusammengeführt werden.

Die in dieser Weise parallel angeordneten Abgasturbolader bzw. Turbinen gestatten es, die Abgasturbolader kleiner zu dimensionieren und die Turbinen auf kleinere Abgasströme auszulegen.

Zwei parallel geschaltete Abgasturbolader bieten neben dem geringeren Bauraumbedarf noch weitere Vorteile. Das Ansprechverhalten einer derartig aufgeladenen Brennkraftmaschine ist gegenüber einer vergleichbaren Brennkraftmaschine mit nur einem Abgasturbolader verbessert. Der Grund hierfür ist darin zu finden, daß die beiden kleineren Abgasturbolader weniger träge sind als ein großer Abgasturbolader bzw. das Laufzeug sich schneller beschleunigen und verzögern läßt.

Wie bereits oben erwähnt sind neben der Aufladung weitere Maßnahmen erforderlich, um zukünftige Grenzwerte für Schadstoffemissionen einzuhalten. Im Mittelpunkt der Entwicklungsarbeiten steht dabei unter anderem die Reduzierung der Stickoxidemissionen, die insbesondere bei den Dieselmotoren von hoher Relevanz sind. Da die Bildung der Stickoxide nicht nur einen Luftüberschuß, sondern auch hohe Temperaturen erfordert, besteht ein Konzept zur Senkung der Stickoxidemissionen darin, Verbrennungsprozesse bzw. -verfahren mit niedrigeren Verbrennungstemperaturen zu entwickeln.

Dabei ist die Abgasrückführung d.h. die Rückführung von Verbrennungsgasen aus der Abgasleitung in die Ansaugleitung zielführend, bei der mit zunehmender Abgasrückführrate die Stickoxidemissionen deutlich gesenkt werden können. Die Abgasrückführrate $x_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und $m_{Frischluft}$ die zugeführte - gegebenenfalls durch einen Verdichter geführte und komprimierte - Frischluft bzw. Verbrennungsluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, sind hohe Abgasrückführraten erforderlich, die in der Größenordnung von $x_{AGR} \approx 60\%$ bis 70% liegen können.

Dadurch ergibt sich aber ein Konflikt beim Betrieb einer Brennkraftmaschine mit Abgasturboaufladung und gleichzeitiger Verwendung einer Abgasrückführung, da das rückgeführte Abgas stromaufwärts der Turbine aus der Abgasleitung entnommen wird. Anhand einer einstufig aufgeladenen Brennkraftmaschine mit einem Abgasturbolader läßt sich dieser Konflikt leicht verdeutlichen.

Bei einer Steigerung der Abgasrückführrate nimmt gleichzeitig der verbleibende der Turbine zugeführte Abgasstrom ab. Der kleinere Abgasmassenstrom durch die Turbine führt zu einem kleineren Turbinendruckverhältnis. Mit abnehmendem Turbinendruckverhältnis nimmt das Ladedruckverhältnis ebenfalls ab, was gleichbedeutend ist mit einem kleineren Verdichtermassenstrom. Neben dem abnehmenden Ladedruck können sich zusätzliche Probleme beim Betrieb des Verdichters hinsichtlich der Pumpgrenze des Verdichters einstellen.

Die beschriebenen Effekte d. h. die Zunahme der Abgasrückführung und die dadurch hervorgerufene gleichzeitige Abnahme des Ladedrucks bzw. Verdichterstroms führen zu einer fetteren Zylinderfrischladung d.h. zu weniger Frischluft bzw. Sauerstoff im Brennraum. Dies führt zu einer erhöhten Rußbildung, insbesondere bei der Beschleunigung, denn aufgrund der Trägheit des Laufzeugs des Abgasturboladers wird die Brennstoffmenge häufig schneller erhöht als die den Zylindern zugeführte Frischluft.

Aus diesem Grunde sind Aufladekonzepte erforderlich, die - insbesondere im Teillastbereich - ausreichend hohe Ladedrücke bei gleichzeitig hohen Abgasrückführraten sicherstellen. Erschwert wird der aufgezeigte Konflikt zwischen Abgasrückführung und Aufladung dadurch, daß die Rückführung von Abgas aus der Abgasleitung in die Ansaugleitung eine Druckdifferenz d. h. ein Druckgefälle von der Abgasseite hin zur Ansaugseite erfordert. Zur Erzielung der geforderten hohen Abgasrückführraten ist darüber hinaus ein hohes Druckgefälle erforderlich. Diese Zielsetzung erfordert einen niedrigen Ladedruck bzw. einen Ladedruck, der niedriger ist als der Abgasgegendruck in der zur Abgasrückführung genutzten Abgasleitung, was der oben aufgestellten Forderung nach einem hohen Ladedruck widerspricht.

Die aufgezeigten Konflikte bei der gleichzeitigen Verwendung von Abgasturboladern und Abgasrückführsystemen können nach dem Stand der Technik nicht aufgelöst werden kann.

Vor diesem Hintergrund ist es die Aufgabe der vorliegenden Erfindung, eine aufgeladene Brennkraftmaschine gemäß dem Oberbegriff des Anspruchs 1 d. h. der gattungsbildenden Art bereitzustellen, mit der die nach dem Stand der Technik bekannten Nachteile überwunden werden und mit der insbesondere gleichzeitig hohe Abgasrückführraten und hohe Ladedrücke, insbesondere im Teillastbereich, realisiert werden können.

Eine weitere Teilaufgabe der vorliegenden Erfindung ist es, ein Verfahren zur Beeinflussung der Menge an zurückgeführtem Abgas einer aufgeladenen Brennkraftmaschine der oben genannten Art aufzuzeigen.

Gelöst wird die erste Teilaufgabe durch eine aufgeladene Brennkraftmaschine mit mindestens zwei Zylindern, die in der Art konfiguriert sind, daß sie zwei Gruppen mit jeweils mindestens einem Zylinder bilden und beide Zylindergruppen jeweils mit einer separaten Abgasleitung ausgestattet sind und beide Abgasleitungen miteinander in Verbindung stehen, und mit zwei parallel geschalteten Abgasturboladern, wobei eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist und die diesen Turbinen zugeordneten Verdichter in separaten Ansaugleitungen angeordnet sind, die stromabwärts der Verdichter zu einer Gesamtansaugleitung zusammenlaufen und zur Versorgung der Brennkraftmaschine mit Frischluft bzw. Frischgemisch dienen, und die dadurch gekennzeichnet ist, daß eine Leitung zur Abgasrückführung vorgesehen ist, die stromaufwärts einer der beiden Turbinen aus der dieser Turbine zugeordneten Abgasleitung abzweigt und in die Gesamtansaugleitung mündet, und Mittel vorgesehen sind, mit denen die Größe des durch eine der beiden Turbinen geführten Abgasmassenstromes steuerbar ist, so daß diese Turbine als zuschaltbare Turbine fungiert.

Die erfindungsgemäße Brennkraftmaschine ist mit zwei parallel geschalteten Abgasturboladern ausgestattet, deren Turbinen in separaten Abgasleitungen angeordnet sind, wobei die beiden Abgasleitungen miteinander in Verbindung stehen, so daß im gesamten Abgassystem derselbe Abgasgegendruck herrscht. Aus diesem Grund ist grundsätzlich nur ein Abgasrückführsystem erforderlich, um sowohl heißes Abgas aus der ersten Zylindergruppe als auch Abgas aus der zweiten Zylindergruppe in die Ansaugleitung zurückzuführen. Die den beiden Turbinen zugeordneten Verdichter sind in zwei separaten Ansaugleitungen, die stromabwärts zu einer Ansaugleitung zusammenlaufen, angeordnet, so daß diese Verdichter im Rahmen einer einstufigen Verdichtung den Ladedruck gemeinsam generieren.

Erfindungsgemäß sind Mittel vorgesehen, die eine Steuerung des Abgasmassenstromes durch eine der beiden Turbinen erlauben. Die Turbine, deren Abgasstrom durch die Mittel in der Größe steuerbar ist, dient bei der erfindungsgemäßen Brennkraftmaschine als zuschaltbare Turbine. Damit wird eine der beiden Turbinen kontinuierlich von Abgasen durchströmt, wohingegen auf den Abgasstrom der anderen zuschaltbaren Turbine Einfluß genommen wird in der Art, daß die Größe dieses Abgasstromes einstellbar ist. Dadurch wird auch Einfluß genommen auf den Abgasgegendruck. Insbesondere eröffnet sich dadurch die Möglichkeit, auch bei niedrigen Lasten bzw. kleinen Abgasmassenströmen den für eine Abgasrückführung erforderlichen Abgasgegendruck im Abgassystem zu generieren.

Bei niedrigen Lasten bzw. kleinen Abgasmassenströmen wird der Abgasmassenstrom durch die zuschaltbare Turbine reduziert bzw. vollständig unterbunden, so daß der überwiegende Anteil des Abgases bzw. das gesamte Abgas durch die andere Turbine geleitet wird. Die überwiegend vom Abgas durchströmte Turbine stellt gleichzeitig eine ausreichend hohe Turbinenleistung zur Verfügung, um den Aufbau des gewünschten Ladedrucks zu unterstützen. Dies gestattet im Teillastbereich, insbesondere im unteren und mittleren Teillastbereich, sowohl die Bereitstellung eines ausreichend hohen Abgasgegendrucks als auch eines für die Aufladung der Brennkraftmaschine erforderlichen, genügend hohen Ladedrucks.

Mit zunehmender Last bzw. zunehmenden Abgasmengen wird der durch die zuschaltbare Turbine geführte Abgasmassenstrom erhöht, so daß auch im oberen Teillastbereich und nahe der Vollast ausreichend hohe Abgasgegendrücke und hohe Ladedrücke realisiert werden.

An dieser Stelle sei angemerkt, daß die Begriffe "niedrige Lasten" und "hohe Lasten" im Rahmen der vorliegenden Erfindung dahingehend zu verstehen sind, daß unter den Begriff "niedrige Lasten" das gesamte Lastkollektiv subsumiert wird, welches bei der Absolvierung der gesetzlich vorgeschriebenen Tests zur Bestimmung der Schadstoffemissionen durchlaufen wird.

Dadurch wird die erste der Erfindung zugrunde liegende Aufgabe gelöst, nämlich eine aufgeladene Brennkraftmaschine bereitzustellen, mit der die nach dem Stand der Technik bekannten Nachteile überwunden werden und mit der insbesondere gleichzeitig hohe Abgasrückführraten und hohe Ladedrücke, insbesondere im Teillastbereich, realisiert werden können.

Bei den oben gemachten Ausführungen wurde von einer erfindungsgemäßen Brennkraftmaschine ausgegangen, bei der die zuschaltbare Turbine stufenlos zuschaltbar ist d.h. der durch die zuschaltbare Turbine geleitete Abgasmassenstrom stetig veränderbar ist. Grundsätzlich kann die erfindungsgemäße Brennkraftmaschine auch mit einer zweistufig zuschaltbaren Turbine ausgestattet werden, die entweder zugeschaltet oder abgeschaltet wird, was die Steuerung der vorgesehenen Mittel vereinfacht. Eine stufenlos zuschaltbare Turbine hat aber den Vorteil, daß sie gezielt dem momentanen Betriebspunkt der Brennkraftmaschine angepaßt werden kann und damit die Flexibilität der Aufladung erhöht und die Qualität der Aufladung verbessert.

Weitere vorteilhafte Ausführungsformen der Brennkraftmaschine werden im Zusammenhang mit den Unteransprüchen erörtert.

Aus den bereits genannten Gründen sind Ausführungsformen der Brennkraftmaschine vorteilhaft, bei denen die zuschaltbare Turbine stufenlos zuschaltbar ist.

Vorteilhaft sind Ausführungsformen der Brennkraftmaschine, bei denen das Mittel zur Steuerung des Abgasmassenstroms ein Absperrelement, vorzugsweise ein Ventil, ist, das in der der zuschaltbaren Turbine zugeordneten Abgasleitung angeordnet ist.

Mit Hilfe des Absperrelementes wird der Strömungsquerschnitt der Abgasleitung, die der zuschaltbaren Turbine zugeordnet ist, verändert, wobei eine Verkleinerung des Strömungsquerschnittes zu einer Reduzierung des durch die zuschaltbare Turbine geleiteten Abgasmassenstromes und zu der gewünschten Erhöhung des Abgasgegendrucks im Abgassystem führt. Die Erhöhung des Abgasgegendrucks hat auch Einfluß auf die Abgasrückführrate. Prinzipbedingt ist das Absperrelement in der Abgasleitung der zuschaltbaren Turbine angeordnet, so daß unter sämtlichen Betriebsbedingungen Abgas aus der ersten und der zweiten Zylindergruppe mittels Abgasrückführung in die Ansaugleitung der Brennkraftmaschine zurückgeführt werden kann.

Das Absperrelement beeinflußt den Abgasstrom durch die zuschaltbare Turbine und damit indirekt infolge des erhöhten Abgasgegendruckes auch den Abgasmassenstrom durch die andere Turbine. Ein Verstellen des Absperrelementes in Richtung Schließstellung reduziert den Abgasmassenstrom durch die zuschaltbare Turbine, erhöht gleichzeitig den Abgasgegendruck im Abgassystem und damit indirekt den Abgasmassenstrom durch die andere Turbine. Folglich wird die bereitgestellte Turbinenleistung dieser anderen Turbine ebenfalls erhöht, so daß der dieser Turbine zugeordnete Verdichter eine größere Verdichterarbeit leisten kann, was sich vorteilhaft auf den Ladedruck auswirkt.

Es sind sowohl Ausführungsformen der Brennkraftmaschine für die Praxis relevant, bei denen die Abgasleitung der zuschaltbaren Turbine zur Erzielung maximaler Abgasgegendrücke vollständig mittels Absperrelement geschlossen werden kann, als auch Ausführungsformen, bei denen dies nicht der Fall ist.

Vorteilhaft sind Ausführungsformen der Brennkraftmaschine, bei denen das Absperrelement zweistufig schaltbar ist in der Art, daß es entweder vollständig geschlossen oder völlig geöffnet ist. Wie bereits erwähnt vereinfacht dies die Steuerung der Aufladung, weshalb diese Ausführungsform insbesondere Kostenvorteile gegenüber einer stufenlos zuschaltbaren Turbine aufweist. Des weiteren ergibt sich die Möglichkeit, die Brennkraftmaschine während der Tests zur Bestimmung der Schadstoffemissionen in der Art zu betreiben, daß während des gesamten Tests der gesamte Abgasstrom durch eine Turbine geleitet wird und die zuschaltbare Turbine abgeschaltet bleibt. Wird der Bereich im Motorkennfeld, der während der Test maßgeblich ist, verlassen, wird die zuschaltbare Turbine aktiviert.

Vorteilhaft sind Ausführungsformen der Brennkraftmaschine, bei denen das Absperrelement elektrisch, hydraulisch, pneumatisch, mechanisch oder magnetisch steuerbar ist, vorzugsweise mittels der Motorsteuerung der Brennkraftmaschine.

Vorteilhaft sind Ausführungsformen der Brennkraftmaschine, bei denen das Absperrelement in der Abgasleitung angeordnet ist, aus der die Leitung zur Abgasrückführung abzweigt und zwar zwischen der dieser Abgasleitung zugeordneten Turbine und der Leitung zur Abgasrückführung. Damit werden die für die Abgasrückführung vorzusehenden zusätzlichen Leitungen und die anzuordnenden Absperrelemente auf eine Abgasleitung konzentriert, was Vorteile bei der Montage und Instandhaltung hinsichtlich der Zugänglichkeit der entsprechenden Bereiche bietet.

Vorteilhaft sind auch Ausführungsformen der Brennkraftmaschine, bei denen das Absperrelement in der Abgasleitung angeordnet ist, die nicht der Abgasrückführung dient, und zwar stromaufwärts der dieser Abgasleitung zugeordneten Turbine.

Vorteilhaft sind Ausführungsformen der Brennkraftmaschine, bei denen die erste Turbine eine variable Turbinengeometrie aufweist. Eine variable Turbinengeometrie erhöht die Flexibilität der Aufladung. Sie gestattet eine stufenlose Anpassung der Turbinengeometrie an den jeweiligen Betriebspunkt der Brennkraftmaschine. Im Gegensatz zu einer Turbine mit fester Geometrie muß nahezu kein Kompromiß bei der Auslegung der Turbine eingegangen werden, um in sämtlichen Drehzahlbereichen eine mehr oder weniger zufriedenstellende Aufladung zu realisieren. Insbesondere kann auf die energetisch nachteilige Ladeluftabblasung, aber auch auf eine Abgasabblasung, wie sie bei Waste-Gate-Turbinen vorgenommen wird, verzichtet werden.

Jedoch besteht die Möglichkeit, die erste Turbine auf kleine bzw. sehr kleine Abgasströme auszulegen, um unter diesen Betriebsbedingungen - im unteren Teillastbereich - hohe Abgasgegendrücke und gleichzeitig hohe Ladedrücke zu generieren. Dies macht dann jedoch trotz der variablen Geometrie der Turbine eine Abgasabblasung erforderlich, um die Turbine bzw. den Abgasturbolader auch bei größeren Abgasmassenströmen und höheren Lasten, insbesondere nahe der Volllast, betreiben zu können. Hierzu kann die erste Turbine mit einer Bypaßleitung zur Abgasabblasung ausgestattet werden d.h. die erste Turbine wird in der Waste-Gate-Bauweise ausgeführt.

Grundsätzlich ist es aber bereits zielführend, wenn das Abgasgesamtsystem über mindestens eine Vorrichtung zur Abgasabblasung verfügt, da bei der erfindungsgemäßen Brennkraftmaschine die beiden den Turbinen zugeordneten Abgasleitungen miteinander in Verbindung stehen und im gesamten Abgassystem derselbe Abgasgegendruck vorherrscht. Aus diesem Grund kann die Abgasabblasung beispielsweise auch über eine die zweite Turbine überbrückende Bypaßleitung erfolgen, wenn die erste Turbine auf kleine bzw. sehr kleine Abgasmassenströme ausgelegt ist und eine Abgasabblasung erforderlich ist, um die Turbine bei größeren Abgasmassenströmen und höheren Lasten betreiben zu können.

Insbesondere ist es vorteilhaft die andere, nicht zuschaltbare Turbine auf kleine Abgasmassenströme auszulegen, da bei diesen Abgasmengen erfindungsgemäß diese andere Turbine überwiegend bzw. ausschließlich durchströmt wird. Damit kann die Aufladung der Brennkraftmaschine im unteren und mittleren Teillastbereich weiter verbessert werden. Mit zunehmender Abgasmenge wird die zuschaltbare Turbine aktiviert und/oder Abgas über die andere Turbine abgeblasen. Vorzugsweise ist dann die zuschaltbare Turbine größer ausgelegt als die andere Turbine.

Kleiner dimensionierte Turbinen sind aufgrund ihrer geringeren Masse thermisch weniger träge. Der heiße Abgasstrom muß auf dem Weg zu den Abgasnachbehandlungssystemen die Turbinen durchströmen und gibt dort insbesondere während der Warmlaufphase unter Absenkung der Abgastemperatur Wärme an die Turbinen ab, so daß die Erwärmung der Turbinen mit dazu beiträgt, daß die im Abgastrakt angeordneten Katalysatoren verzögert ihre Ansprungtemperatur erreichen.

Zudem ist das Ansprechverhalten einer derartig aufgeladenen Brennkraftmaschine deutlich verbessert. Der Grund hierfür ist darin zu finden, daß kleinere Turbinen bzw. kleinere Verdichter weniger träge sind als größere Turbinen bzw. größere Verdichter, weil das Laufzeug sich schneller beschleunigen und verzögern läßt.

Vorteilhaft sind dabei Ausführungsformen der Brennkraftmaschine, bei denen die erste Turbine das Mittel zur Steuerung des Abgasmassenstroms bildet, so daß die erste Turbine die zuschaltbare Turbine darstellt, wobei durch Verstellen der Turbine in Richtung Querschnittsverkleinerung eine Verkleinerung des durch diese Turbine geführten Abgasmassenstromes realisierbar ist.

Zusätzliche Bauteile, insbesondere ein separates Absperrelement, werden damit entbehrlich, wenn die ohnehin bereits vorhandene Turbine des ersten Abgasturboladers zur Beeinflussung des Abgasmassenstroms und des Abgasgegendrucks genutzt wird. Mit dem separaten Absperrelement entfällt auch eine separate Steuerung dieses Elementes und die dazu erforderliche Steuereinheit.

Vorteilhaft sind aber auch Ausführungsformen der Brennkraftmaschine, bei denen die erste Turbine eine feste, nicht veränderbare Turbinengeometrie aufweist. Im Gegensatz zu der zuvor beschriebenen Turbine mit variabler Geometrie (VTG) entfällt hier prinzipbedingt eine Steuerung. Im ganzen weist diese Ausführungsform daher insbesondere Kostenvorteile auf.

Vorteilhaft sind auch Ausführungsformen der Brennkraftmaschine, bei denen die erste Turbine als Waste-Gate-Turbine ausgeführt ist. Sogenannte Waste-Gate-Turbinen verfügen zum Zwecke einer Abgasabblasung über eine die Turbine überbrückende Bypaßleitung. Eine derartige Turbine kann daher gezielt auf kleine Abgasströme ausgelegt werden, was die Qualität der Aufladung im Teillastbereich deutlich verbessert. Die Turbine an sich kann sowohl über eine feste, unveränderbare Geometrie als auch über eine variable Turbinengeometrie (VTG) verfügen. Mit zunehmendem Abgasstrom wird ein größerer Anteil des Abgases über die Bypaßleitung an der Turbine vorbei geführt. Zur Steuerung der Abgasabblasung ist ein Absperrelement in der Bypaßleitung vorgesehen. Eine Waste-Gate-Turbine mit fester Turbinengeometrie ist kostengünstiger. Die Steuerung ist einfacher und kostengünstiger als bei einer variablen Turbinengeometrie.

Vorteilhaft sind Ausführungsformen der Brennkraftmaschine, bei denen der der ersten Turbine zugeordnete erste Verdichter eine variable Verdichtergeometrie aufweist. Wie bereits im Zusammenhang mit der VTG-Turbine ausgeführt, erhöht eine variable Geometrie die Qualität und Flexibilität der Aufladung aufgrund der Möglichkeit einer stufenlosen Anpassung der Geometrie an den jeweiligen Betriebspunkt der Brennkraftmaschine.

Insbesondere, wenn nur ein sehr geringer Abgasmassenstrom durch die erste Turbine geleitet wird, erweist sich eine variable Verdichtergeometrie (VVG) als vorteilhaft, da durch Verstellen der Schaufeln die Pumpgrenze des Verdichters im Verdichterkennfeld hin zu kleinen Verdichterströmen verschoben werden kann und so ein Arbeiten des Verdichters jenseits der Pumpgrenze vermieden wird. Diese Ausführungsform ist insbesondere dann vorteilhaft, wenn die Turbine des ersten Abgasturboladers über eine variable Turbinengeometrie verfügt und die Verdichtergeometrie auf die Turbinengeometrie kontinuierlich abgestimmt wird.

Eine variable Geometrie (VVG) des ersten Verdichters erweist sich insbesondere in den Fällen als vorteilhaft, in denen die erste Turbine als zuschaltbare Turbine betrieben wird. Wenn der Abgasstrom durch die erste Turbine reduziert bzw. vollständig unterbunden wird, stellt diese Turbine eine verringerte bzw. keine Leistung zur Verdichtung der Frischluft im ersten Verdichter zur Verfügung, so daß zu befürchten ist, daß der zweite Verdichter in den ersten Verdichter hineinfördert und der Ladedruck in der Ansaugleitung infolge einer Rückströmung in der ersten Ansaugleitung durch den ersten Verdichter abfällt. Diesem nachteiligen Effekt kann durch Verstellen der Verdichtergeometrie in Richtung Schließstellung entgegen gewirkt werden.

Vorteilhaft sind auch Ausführungsformen der Brennkraftmaschine, bei denen der der ersten Turbine zugeordnete erste Verdichter eine feste, nicht veränderbare Verdichtergeometrie aufweist. Verdichter mit fester Geometrie weisen aus denselben Gründen wie Turbinen mit fester Geometrie, nämlich aufgrund der einfacheren Bauweise, Kostenvorteile auf.

Vorteilhaft sind Ausführungsformen der Brennkraftmaschine, bei denen der der ersten Turbine zugeordnete erste Verdichter mit einer Bypaßleitung ausgestattet ist, die stromabwärts des ersten Verdichters aus der ersten Ansaugleitung abzweigt und vorzugsweise stromaufwärts des ersten Verdichters wieder in die erste Ansaugleitung mündet. Zur Steuerung der abgeblasenen bzw. rückgeführten Frischluftmenge ist ein Absperrelement in der Bypaßleitung vorgesehen. Diese Ausführung des Verdichters eröffnet weitere Möglichkeiten im Rahmen der Aufladung. Sie gestattet einerseits die Einstellung des Ladedrucks mittels der abgeblasenen Frischluftmenge. Andererseits die Abblasung von Frischluft für den Fall, daß die erste Turbine als zuschaltbare Turbine dient und stromabwärts des Verdichters ein Absperrelement in der ersten Ansaugleitung vorgesehen ist, um eine Rückströmung in den ersten Verdichter zu unterbinden.

Insbesondere gestattet eine den ersten Verdichter überbrückende Bypaßleitung, daß der erste Abgasturbolader, wenn er als zuschaltbarer Abgasturbolader dient, ohne Pumpen auf das Druckverhältnis des anderen, zweiten Verdichters gebracht werden kann. Dabei fördert der erste Verdichter einen Volumenstrom, der so bemessen ist, das der Verdichter im stabilen Verdichterkennfeldbereich arbeitet. Ohne die vorgeschlagene Bypaßleitung würde der Verdichter des zuschaltbaren Abgasturboladers beim Hochfahren pumpen, da er bei verschlossenem Absperrelement lediglich einen kleinen Frischluftmassenstrom fördern könnte.

Vorteilhaft sind Ausführungsformen der Brennkraftmaschine, bei denen stromabwärts der Verdichter ein Ladeluftkühler in der Gesamtansaugleitung angeordnet ist. Der Ladeluftkühler senkt die Lufttemperatur und steigert damit die Dichte der Luft, wodurch auch der Kühler zu einer besseren Füllung des Brennraums mit Luft d. h. zu einer größeren Luftmasse beiträgt.

Vorteilhaft sind Ausführungsformen der Brennkraftmaschine, bei denen die Leitung zur Abgasrückführung stromabwärts des Ladeluftkühlers in die Gesamtansaugleitung mündet. Auf diese Weise wird der Abgasstrom nicht durch den Ladeluftkühler geführt und kann folglich diesen Kühler nicht durch Ablagerungen von im Abgasstrom enthaltenen Schadstoffen, insbesondere Rußpartikeln und Öl, verschmutzen.

Vorteilhaft sind Ausführungsformen der Brennkraftmaschine, bei denen in der Leitung zur Abgasrückführung ein zusätzlicher Kühler vorgesehen ist. Dieser zusätzliche Kühler senkt die Temperatur im heißen Abgasstrom und steigert damit die Dichte der Abgase. Die Temperatur der Zylinderfrischladung, die sich bei der Mischung der Frischluft mit den rückgeführten Abgasen einstellt, wird hierdurch folglich weiter gesenkt, wodurch auch der zusätzliche Kühler zu einer besseren Füllung des Brennraums mit Frischgemisch beiträgt.

Vorteilhaft sind Ausführungsformen der Brennkraftmaschine, bei denen in der Leitung zur Abgasrückführung ein Absperrelement vorgesehen ist. Dieses Absperrelement dient der Steuerung der Abgasrückführrate. Anders als die Mittel, die zur Steuerung des Abgasmassenstroms durch die zuschaltbare Turbine vorgesehen sind und die den Abgasgegendruck beeinflussen und so indirekt Einfluß auf die AGR-Rate nehmen, kann mit diesem Absperrelement die Abgasrückführung direkt gesteuert und auch völlig unterbunden werden.

Im folgenden werden die bevorzugten Bauweisen der Turbine und des Verdichters des zweiten Abgasturboladers aufgeführt. Die Vorteile der einzelnen Bauweisen, nämlich der variablen Geometrie, der festen Geometrie sowie der Waste-Gate-Bauweise wurden bereits ausführlich im Zusammenhang mit dem ersten Abgasturbolader bzw. der ersten Turbine und dem ersten Verdichter erörtert, weshalb an dieser Stelle auf die entsprechenden Ausführungen Bezug genommen wird, um Wiederholungen zu vermeiden.

Vorteilhaft sind Ausführungsformen der Brennkraftmaschine, bei denen die zweite Turbine eine variable Turbinengeometrie aufweist. Dadurch wird insbesondere die Qualität und Flexibilität der Aufladung erhöht. Die Geometrie kann dem Abgasmassenstrom durch Verstellen der Laufradschaufeln angepaßt werden.

Vorteilhaft sind Ausführungsformen der Brennkraftmaschine, bei denen die zweite Turbine das Mittel zur Steuerung des Abgasmassenstroms bildet, so daß die zweite Turbine die zuschaltbare Turbine bildet, wobei durch Verstellen der zweiten Turbine in Richtung Querschnittsverkleinerung eine Verkleinerung des durch die zweite Turbine geführten Abgasmassenstromes realisierbar ist. Da die erfindungsgemäße Brennkraftmaschine im Hinblick auf die Anordnung der beiden Turbinen symmetrisch aufgebaut ist, kann sowohl die erste Turbine als auch die zweite Turbine als zuschaltbare Turbine dienen bzw. ausgeführt werden.

Vorteilhaft sind Ausführungsformen der Brennkraftmaschine, bei denen die zweite Turbine eine feste, nicht veränderbare Turbinengeometrie aufweist. Hierdurch wird ein kostengünstiges Aufladekonzept ermöglicht.

Vorteilhaft sind Ausführungsformen der Brennkraftmaschine, bei denen die zweite Turbine als Waste-Gate-Turbine ausgeführt ist. Hierdurch wird ein kostengünstiges Aufladekonzept ermöglicht und gleichzeitig eine Auslegung der Turbine auf kleine Abgasmassenströme d.h. auf den Teillastbereich, der insbesondere im Hinblick auf die zur Bestimmung der Schadstoffemissionen relevanten Tests von Interesse ist. Die Geometrie der zweiten Turbine kann dabei unveränderlich oder variabel sein.

Vorteilhaft sind Ausführungsformen der Brennkraftmaschine, bei denen der der zweiten Turbine zugeordnete zweite Verdichter eine variable Verdichtergeometrie aufweist. Wie oben bereits erwähnt bietet die variable Geometrie insbesondere Vorteile wegen der Möglichkeit des Verschiebens der Pumpgrenze des Verdichters. Es können auch bei kleinen Frischluftmassenströmen hohe Ladedrücke generiert werden. Bildet die erste Turbine die zuschaltbare Turbine kann durch Einstellen des minimalen Strömungsquerschnitts des Verdichters einer Rückströmung in diesen Verdichter entgegen gewirkt werden.

Vorteilhaft sind Ausführungsformen der Brennkraftmaschine, bei denen der der zweiten Turbine zugeordnete zweite Verdichter eine feste, nicht veränderbare Verdichtergeometrie aufweist. Kostenvorteile und die Vereinfachung der Motorsteuerung der gesamten Brennkraftmaschine stehen dabei im Vordergrund.

Vorteilhaft sind Ausführungsformen der Brennkraftmaschine, bei denen der der zweiten Turbine zugeordnete zweite Verdichter mit einer Bypaßleitung ausgestattet ist, die stromabwärts des zweiten Verdichters aus der zweiten Ansaugleitung abzweigt und vorzugsweise stromaufwärts des zweiten Verdichters wieder in die zweite Ansaugleitung mündet. Zur Steuerung der abgeblasenen bzw. rückgeführten Frischluftmenge ist ein Absperrelement in der Bypaßleitung vorgesehen. Die Bypaßleitung gestattet die Einstellung des Ladedrucks mittels der abgeblasenen Frischluftmenge und die Abblasung von Frischluft für den Fall, daß die zweite Turbine als zuschaltbare Turbine dient und der zweite Verdichters mittels eines stromabwärts vorgesehenen Absperrelements von der Gesamtansaugleitung abgetrennt wird, um eine Rückströmung in den Verdichter zu verhindern.

Vorteilhaft sind Ausführungsformen der Brennkraftmaschine, bei denen stromabwärts des der zuschaltbaren Turbine zugeordneten Verdichters ein Absperrelement in der diesem Verdichter zugeordneten Ansaugleitung vorgesehen ist. Wie bereits weiter oben ausgeführt dient dieses Absperrelement der Vermeidung von Rückströmungen durch den Verdichter, der der zuschaltbaren Turbine zugeordnet ist, wenn die zuschaltbare Turbine keine oder nur eine geringe Leistung zur Verdichtung bereitstellt.

Die zweite der Erfindung zugrunde liegende Teilaufgabe wird gelöst durch ein Verfahren zum Betreiben einer aufgeladenen Brennkraftmaschine, das dadurch gekennzeichnet ist, daß

■ bei niedrigen Drehzahlen bzw. kleinen Abgasmengen die zur Steuerung des durch die zuschaltbare Turbine geführten Abgasmassenstromes vorgesehenen Mittel in der Art gesteuert werden, daß der wesentliche Anteil des Abgases oder das gesamte Abgas durch die andere Turbine geführt wird d. h. der durch die andere Turbine geleitete Abgasmassenstrom größer ist als der durch die zuschaltbare Turbine geleitete Abgasmassenstrom, und
■ mit zunehmender Drehzahl bzw. zunehmender Abgasmenge die zur Steuerung des durch die zuschaltbare Turbine geführten Abgasmassenstromes vorgesehenen Mittel in der Art gesteuert werden,

daß mehr Abgas durch die zuschaltbare Turbine geführt wird.

An dieser Stelle sei angemerkt, daß die Begriffe "niedrige Drehzahlen" und "hohe Drehzahlen" im Rahmen der vorliegenden Erfindung dahingehend zu verstehen sind, daß unter den Begriff "niedrige Drehzahlen" das gesamte Drehzahlband subsumiert wird, welches bei der Absolvierung der gesetzlich vorgeschriebenen Tests zur Bestimmung der Schadstoffemissionen durchlaufen wird.

Der Begriff "niedrige Lasten" ist dahingehend zu verstehen, daß unter diesen Begriff das gesamte Lastkollektiv subsumiert wird, welches bei der Absolvierung der gesetzlich vorgeschriebenen Tests zur Bestimmung der Schadstoffemissionen durchlaufen wird.

Das im Zusammenhang mit der erfindungsgemäßen Brennkraftmaschine Gesagte gilt ebenfalls für das erfindungsgemäße Verfahren. Durch das Vorsehen von Mitteln, die zur Steuerung des durch die zuschaltbare Turbine geführten Abgasmassenstromes verwendet werden, ist es möglich, unter sämtlichen Betriebsbedingungen, insbesondere bei niedrigen Drehzahlen bzw. niedrigen Lasten, hohe AGR-Raten und gleichzeitig hohe Ladedrücke zu realisieren.

Obwohl die Anordnung der beiden Turbinen in den beiden Abgasleitungen symmetrisch ist, werden die beiden Turbinen doch unterschiedlich betrieben bzw. gesteuert. Während eine Turbine kontinuierlich von Abgas durchströmt wird, wird der Abgasstrom durch die zuschaltbare Turbine variiert.

Bei Brennkraftmaschinen, bei denen das Mittel zur Steuerung des Abgasmassenstroms ein Absperrelement ist, das in der der zuschaltbaren Turbine zugeordneten Abgasleitung angeordnet ist und das zweistufig schaltbar ist in der Art, daß es entweder vollständig geschlossen oder völlig geöffnet ist, sind Ausführungsformen des Verfahrens vorteilhaft, bei denen

■ bei niedrigen Drehzahlen bzw. kleinen Abgasmengen das Absperrelement vollständig geschlossen wird, so daß kein Abgas durch die zuschaltbare Turbine geleitet wird und das gesamte Abgas durch die andere Turbine geführt wird, und
■ bei hohen Drehzahlen bzw. großen Abgasmengen das Absperrelement vollständig geöffnet wird, so daß das Abgas durch beide Turbinen geführt wird.

Bei Brennkraftmaschinen, bei denen die zuschaltbare Turbine eine variable Turbinengeometrie aufweist und das Mittel zur Steuerung des Abgasmassenstroms bildet, sind Ausführungsformen des Verfahrens vorteilhaft, bei denen

■ bei niedrigen Drehzahlen bzw. kleinen Abgasmengen die Geometrie der zuschaltbaren Turbine in der Art verstellt wird, daß diese Turbine ihren kleinsten Strömungsquerschnitt aufweist, und
■ mit zunehmender Drehzahl bzw. zunehmenden Abgasmengen die Geometrie der zuschaltbaren Turbine in Richtung Querschnittvergrößerung verstellt wird, so daß der durch diese Turbine geleitete Abgasmassenstrom zunimmt.

Bei Brennkraftmaschinen, bei denen stromabwärts des der zuschaltbaren Turbine zugeordneten Verdichters ein Absperrelement in der diesem Verdichter zugeordneten Ansaugleitung vorgesehen ist, sind Ausführungsformen des Verfahrens vorteilhaft, bei denen das Absperrelement vollständig geschlossen wird, wenn das gesamte Abgas oder mehr als 80% des Abgases durch die andere Turbine geleitet wird.

Vorteilhaft sind dabei Ausführungsformen der Brennkraftmaschine, bei denen das Absperrelement vollständig geöffnet wird, wenn das Abgas durch beide Turbinen geleitet wird und mindestens 20% des Abgases durch die zuschaltbare Turbine geführt wird.

Bei Brennkraftmaschinen, bei denen stromabwärts des der zuschaltbaren Turbine zugeordneten Verdichters ein Absperrelement in der diesem Verdichter zugeordneten Ansaugleitung vorgesehen ist und dieser Verdichter mit einer Bypaßleitung ausgestattet ist, die stromabwärts des Verdichters aus der diesem Verdichter zugeordneten Ansaugleitung abzweigt, sind Verfahrensvarianten vorteilhaft, bei denen der durch diesen Verdichter geführte Frischluftmassenstrom weitestgehend abgeblasen wird, wenn das Absperrelement vollständig geschlossen ist.

Im folgenden wird die Erfindung anhand von neun Ausführungsbeispielen gemäß den Figuren 1 bis 9 näher beschrieben. Hierbei zeigt:

Fig. 1     schematisch eine erste Ausführungsform der Brennkraftmaschine,

Fig. 2     schematisch eine zweite Ausführungsform der Brennkraftmaschine,

Fig. 3 schematisch eine dritte Ausführungsform der Brennkraftmaschine,

Fig. 4 schematisch eine vierte Ausführungsform der Brennkraftmaschine,

Fig. 5 schematisch eine fünfte Ausführungsform der Brennkraftmaschine,

Fig. 6 schematisch eine sechste Ausführungsform der Brennkraftmaschine,

Fig. 7 schematisch eine siebte Ausführungsform der Brennkraftmaschine,

Fig. 8 schematisch eine achte Ausführungsform der Brennkraftmaschine, und

Fig. 9 schematisch eine neunte Ausführungsform der Brennkraftmaschine.

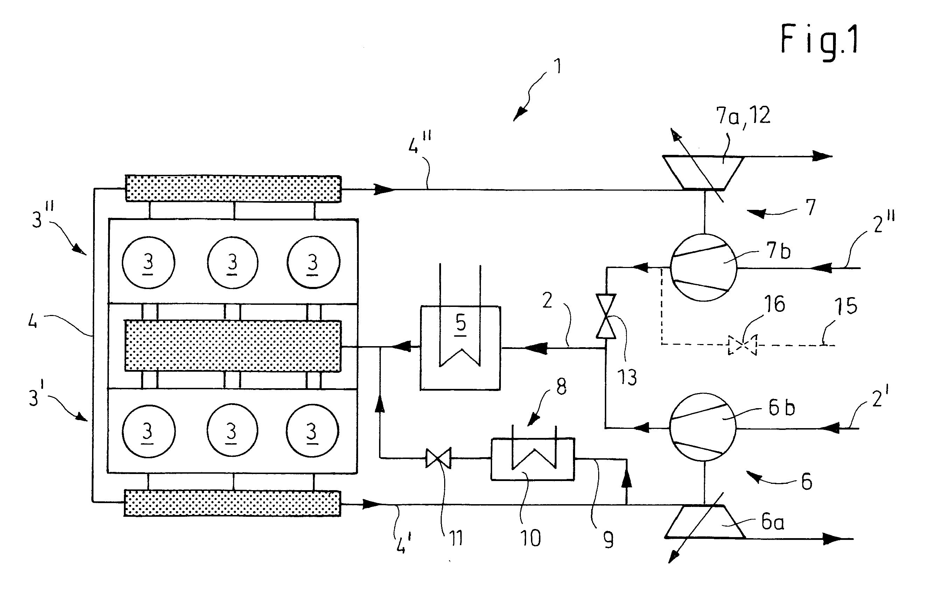

Figur 1 zeigt eine erste Ausführungsform der aufgeladenen Brennkraftmaschine 1 am Beispiel eines Sechs-Zylinder-V-Motors. Die Zylinder 3 der Brennkraftmaschine 1 sind in zwei Zylindergruppen 3',3" aufgeteilt, die jeweils über eine separate Abgasleitung 4',4" verfügen, die miteinander in Verbindung 4 stehen und zur Abführung der heißen Abgase der Brennkraftmaschine genutzt werden.

Es sind zwei parallel geschaltete Abgasturbolader 6,7 vorgesehen, wobei die erste Turbine 6a des ersten Abgasturboladers 6 in der ersten Abgasleitung 4' der ersten Zylindergruppe 3' und die zweite Turbine 7a des zweiten Abgasturboladers 7 in der zweiten Abgasleitung 4" der zweiten Zylindergruppe 3" angeordnet ist.

Die diesen Turbinen 6a,7a zugeordneten Verdichter 6b,7b sind ebenfalls in separaten Ansaugleitungen 2',2" angeordnet, die stromabwärts der Verdichter 6b,7b zu einer Gesamtansaugleitung 2 zusammenlaufen und zur Versorgung der Brennkraftmaschine 1 mit Frischluft bzw. Frischgemisch dienen.

Stromabwärts der Verdichter 6b,7b ist ein Ladeluftkühler 5 in der Gesamtansaugleitung 2 angeordnet. Der Ladeluftkühler 5 senkt die Lufttemperatur und steigert damit die Dichte der Luft, wodurch er zu einer besseren Füllung des Brennraums mit Luft beiträgt.

Bei der in der Figur 1 dargestellten Ausführungsform verfügt sowohl die Turbine 6a des ersten Abgasturboladers 6 als auch die Turbine 7a des zweiten Abgasturboladers 7 über eine variable Turbinengeometrie (VTG - kenntlich gemacht durch den Pfeil), die durch Verstellen der Laufradschaufeln eine stufenlose Anpassung der Turbinengeometrie an den momentanen Abgasmassenstrom ermöglicht. Dadurch wird insbesondere die Qualität und Flexibilität der Aufladung erhöht.

Die Verdichter 6b, 7b können eine feste Geometrie aufweisen oder ebenfalls mit einer variablen Geometrie ausgeführt sein. Eine variable Geometrie ist vorteilhaft, wenn die entsprechende Turbine 6a,7a über eine variable Turbinengeometrie verfügt und die Verdichtergeometrie auf die Turbinengeometrie kontinuierlich abgestimmt wird.

Insbesondere bei kleinen Abgasmassenströmen durch die Turbine 6a, 7a und den damit verbundenen kleinen Verdichtermassenströmen erweist sich eine variable Verdichtergeometrie (VVG) als vorteilhaft, da durch Verstellen der Schaufeln die Pumpgrenze des Verdichters 6b, 7b im Verdichterkennfeld hin zu kleinen Verdichterströmen verschoben werden kann und so ein Arbeiten des Verdichters 6b,7b jenseits der Pumpgrenze vermieden wird.

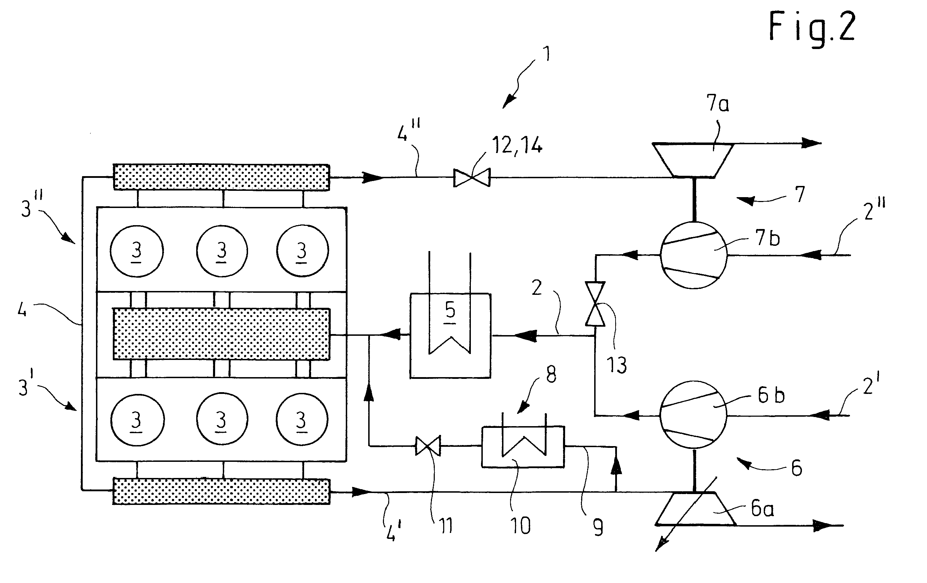

Grundsätzlich können die Verdichter 6b, 7b auch mit einer Leitung 15 zur Ladeluftabblasung ausgestattet sein. Dies ist für den zweiten Verdichter 7b beispielhaft in Figur 1 angedeutet (gestrichelt dargestellt). Stromabwärts des zweiten Verdichters zweigt eine Bypaßleitung 15 aus der diesem Verdichter 7b zugeordneten Ansaugleitung 2" ab. In der Bypaßleitung 15 ist zur Steuerung der abgeblasenen Frischluftmenge ein Absperrelement 16 angeordnet, mit dem auch der Ladedruck eingestellt werden kann. Eine weitere Verwendung dieser Bypaßleitung 15 wird weiter unten noch erörtert. Hilfreich ist eine derartige, den Verdichter 7b des zuschaltbaren Abgasturboladers 7 überbrückende Bypaßleitung 15 insbesondere beim Hochfahren des zuschaltbaren Abgasturboladers 7, um ein Pumpen des Verdichters 7b zu vermeiden. Der erste und/oder der zweite Verdichter der Ausführungsformen gemäß den Figuren 2 bis 9 kann entsprechend auch mit einer Bypaß- bzw. Abblaseleitung ausgestattet sein.

Die in Figur 1 dargestellte Brennkraftmaschine 1 ist mit einer Abgasrückführung 8 ausgestattet. Hierzu ist eine Leitung 9 zur Abgasrückführung 8 vorgesehen, die stromaufwärts der ersten Turbine 6a aus der dieser ersten Turbine 6a zugeordneten ersten Abgasleitung 4' abzweigt und in die Gesamtansaugleitung 2 mündet. Dabei mündet die Leitung 9 zur Abgasrückführung 8 stromabwärts des Ladeluftkühlers 5 in die Gesamtansaugleitung 2. Auf diese Weise wird der Abgasstrom nicht durch den Ladeluftkühler 5 geführt und kann diesen Kühler 5 nicht verschmutzen.

In der Leitung 9 ist ein zusätzlicher Kühler 10 vorgesehen, der die Temperatur des heißen Abgasstromes senkt. Ebenfalls in dieser Leitung 9 ist zur Steuerung der Abgasrückführrate ein Absperrelement 11 angeordnet.

Erfindungsgemäß wird eine der beiden Turbinen 7a als zuschaltbare Turbine 7a ausgeführt, wobei Mittel 12 vorgesehen sind, mit denen die Größe des Abgasmassenstromes, der durch diese Turbine 7a geführt wird, steuerbar ist.

Bei der in Figur 1 dargestellten Ausführungsform dient die zweite Turbine 7a, welche eine variable Geometrie aufweist, als zuschaltbare Turbine 7a und bildet gleichzeitig das Mittel 12 zur Steuerung des Abgasmassenstromes durch diese zuschaltbare Turbine 7a.

Durch Verstellen der Turbine 7a in der Art, daß der Turbinenquerschnitt verkleinert wird, wird der durch die Turbine 7a geführte Abgasmassenstrom reduziert. Gleichzeitig erhöht sich der Abgasgegendruck im Abgassystem, was im Hinblick auf die Abgasrückführung 8 und insbesondere hinsichtlich hoher AGR-Raten als vorteilhaft anzusehen ist. Der Abgasmassenstrom durch die erste Turbine 6a nimmt infolge des erhöhten Abgasgegendrucks ebenfalls zu, so daß diese Turbine 6a dem ersten Verdichter 6b mehr Leistung zur Verdichtung der Frischluft bereitstellt, was sich vorteilhaft auf die Generierung ausreichend hoher Ladedrücke auswirkt.

Infolge der Verminderung des durch die zuschaltbare Turbine 7a geleiteten Abgasmassenstromes nimmt die von dieser Turbine 7a zur Verfügung gestellte Leistung ab. Wird der Abgasmassenstrom durch die zuschaltbare Turbine 7a deutlich reduziert bzw. vollständig unterbunden, besteht die Gefahr, daß der erste Verdichter 6b in den zweiten Verdichter 7b hineinfördert und es zu Rückströmungen in der zweiten Ansaugleitung 2" kommt, was sich nachteilig auf den Ladedruck auswirkt. Um dies zu verhindern, ist stromabwärts des der zuschaltbaren Turbine 7a zugeordneten Verdichters 7b ein Absperrelement 13 in der diesem Verdichter 7b zugeordneten Ansaugleitung 2" angeordnet, mit dem der Verdichter 7b vom übrigen Ansaugsystem abgetrennt werden kann. Dabei wird die Bypaßleitung 15 zum Abblasen bzw. Rückführen der Frischluft geöffnet.

Alternativ zu dem Absperrelement 13 stromabwärts des zweiten Verdichters 7b kann der zweite Verdichter 7b, der der zuschaltbaren Turbine 7a zugeordnet ist, mit einer variablen Verdichtergeometrie (VVG) ausgestattet werden. Zur Vermeidung bzw. Reduzierung von Rückströmungen in der zweiten Ansaugleitung 2" wird dann die Geometrie des Verdichters 7b in Richtung Schließstellung verstellt. Vorzugsweise wird dabei der Verdichter 7b auf seinen kleinsten Strömungsquerschnitt eingestellt.

Es besteht die Möglichkeit, die zuschaltbare Turbine 7a und/oder die andere Turbine 6a auf kleine bzw. sehr kleine Abgasströme auszulegen, um unter diesen Betriebsbedingungen hohe Abgasgegendrücke und gleichzeitig hohe Ladedrücke zu generieren. Dies macht jedoch trotz der variablen Geometrie der Turbine 6a,7a eine Bypaßleitung zur Abgasabblasung und damit die Waste-Gate-Bauweise erforderlich (nicht dargestellt), um die Turbine 6a,7a bzw. den Abgasturbolader 6,7 auch bei größeren Abgasmassenströmen und höheren Lasten, insbesondere nahe der Volllast, betreiben zu können.

Figur 2 zeigt schematisch eine zweite Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 2 dargestellten Brennkraftmaschine 1 die zweite Turbine 7a mit einer festen d. h. unveränderlichen Turbinengeometrie ausgeführt. Im Gegensatz zu der zuvor beschriebenen Ausführungsform der Turbine mit variabler Geometrie (VTG) entfällt hier prinzipbedingt eine Steuerung. Im ganzen weist diese Ausführungsform insbesondere Kostenvorteile auf.

Nichtsdestotrotz bildet die zweite Turbine 7a wieder die zuschaltbare Turbine 7a. Da sie aber über keine variable Turbinengeometrie verfügt, müssen Mittel 12 vorgesehen werden, mit denen die Größe des Abgasmassenstromes durch die zweite Turbine 7a gesteuert wird.

Zur Steuerung des Abgasmassenstromes ist stromabwärts der zweiten Turbine 7a in der zweiten Abgasleitung 4" ein separates Absperrelement 14 vorgesehen. Mit dem Absperrelement 14 wird der Strömungsquerschnitt der zweiten Abgasleitung 4" stufenlos verändert oder im Rahmen einer zweistufigen Schaltung vollständig geöffnet bzw. vollständig geschlossen. Eine Verkleinerung des Strömungsquerschnittes vermindert den durch die zuschaltbare Turbine 7a geführten Abgasmassenstrom und erhöht gleichzeitig den Abgasgegendruck.

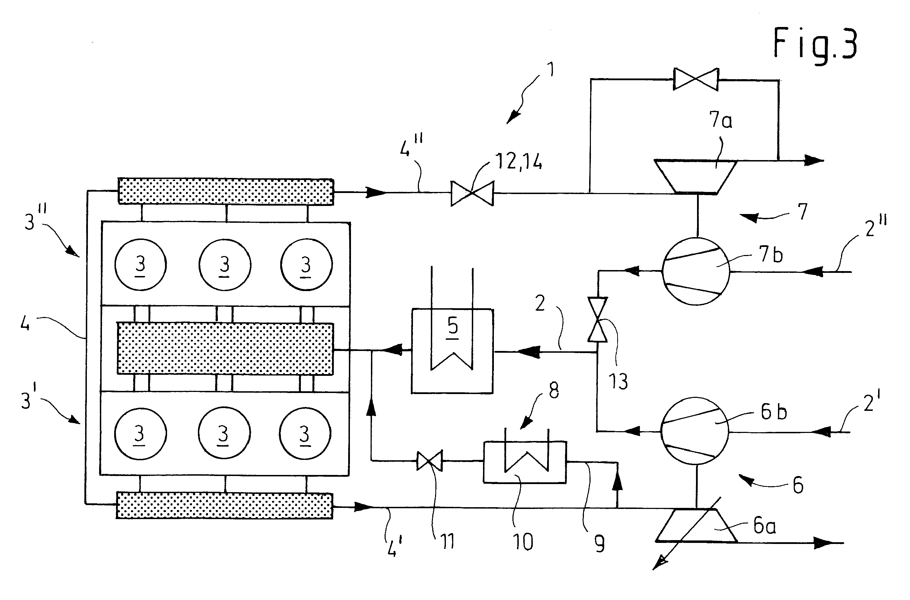

Figur 3 zeigt schematisch eine dritte Ausführungsform der aufgeladenen Brennkraftmaschine 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Im Unterschied zu der in Figur 2 dargestellten Ausführungsform ist bei der in Figur 3 dargestellten Brennkraftmaschine 1 die zweite Turbine 7a mit einer Bypaßleitung ausgestattet d.h. in der Waste-Gate-Bauweise ausgeführt. Diese Bauweise erlaubt die Auslegung der zweiten Turbine 7a auf kleine Abgasmassenströme.

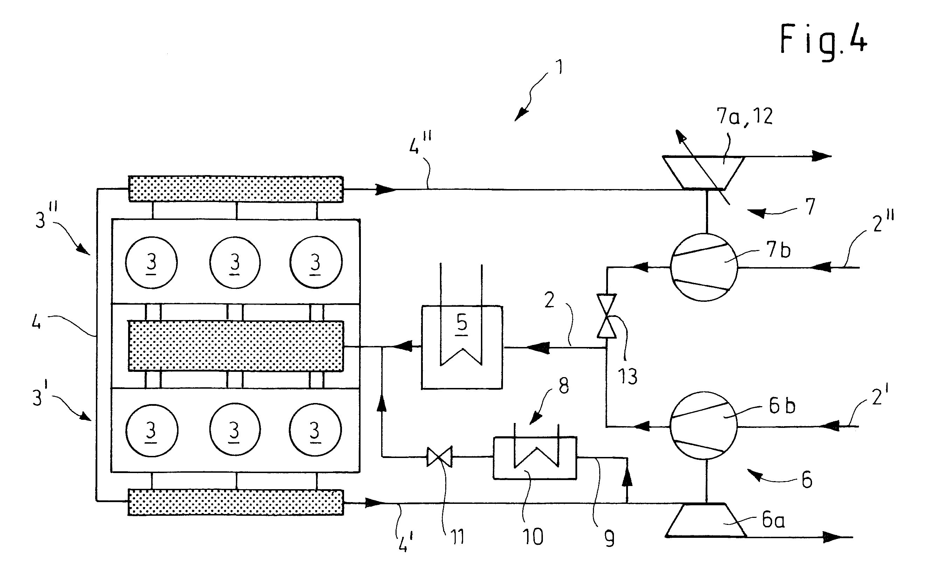

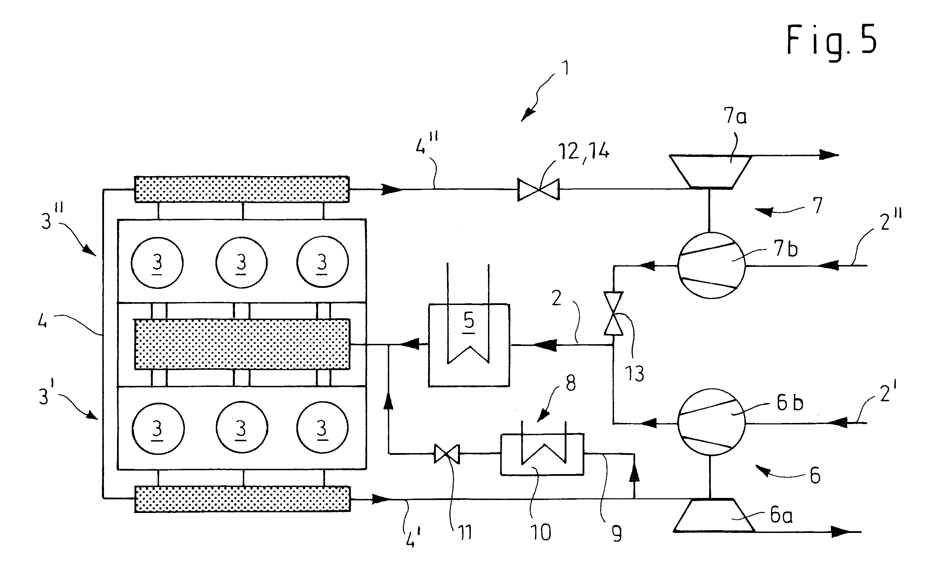

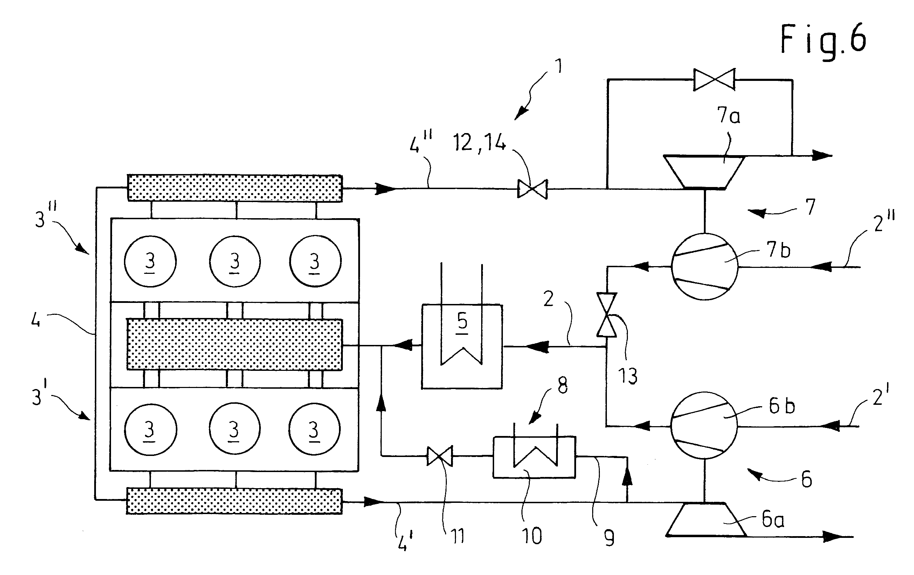

Die Figuren 4, 5 und 6 zeigen schematisch eine vierte, eine fünfte bzw. eine sechste Ausführungsform der aufgeladenen Brennkraftmaschine 1. Dabei baut die Figur 4 auf der Figur 1, die Figur 5 auf der Figur 2 und die Figur 6 auf der Figur 3 auf. Es sollen nur die Unterschiede zu den in den Figuren 1, 2 und 3 dargestellten Ausführungsformen erörtert werden, weshalb im übrigen bezug genommen wird auf die Figuren 1, 2 und 3. Für dieselben Bauteile wurden dieselben Bezugszeichen verwendet.

Der Unterschied der Ausführungsformen besteht darin, daß die erste Turbine 6a der Brennkraftmaschine 1 mit einer festen d. h. unveränderlichen Turbinengeometrie ausgeführt ist. Im Gegensatz zu einer Turbine mit variabler Geometrie (VTG) entfällt hier prinzipbedingt eine Steuerung. Im ganzen weist diese Ausführungsform insbesondere Kostenvorteile auf.

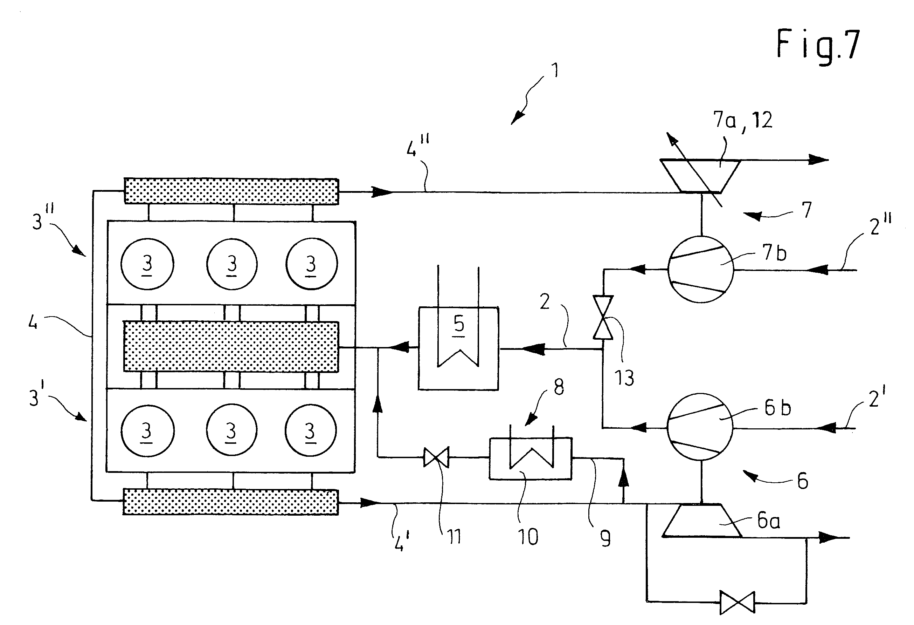

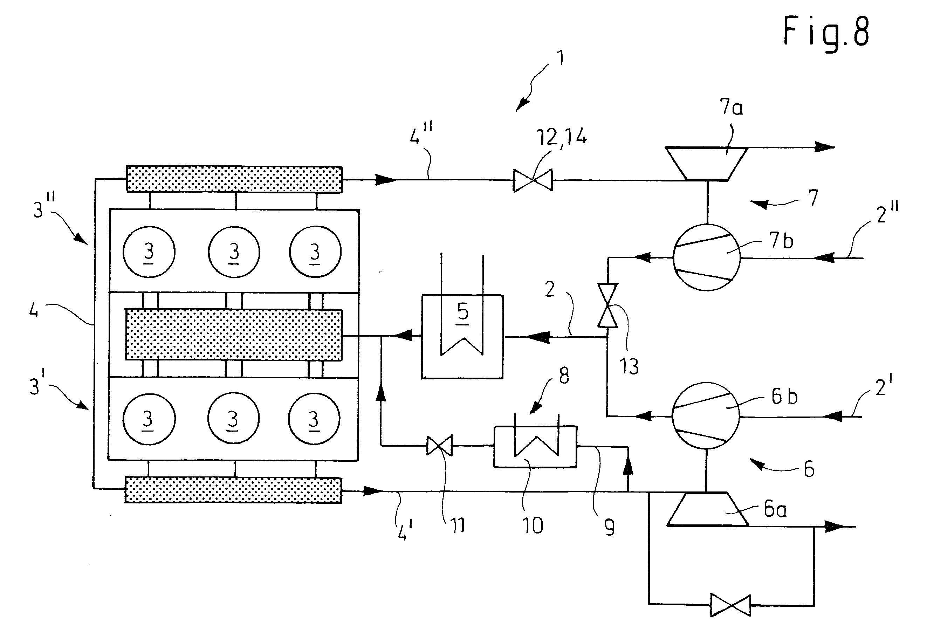

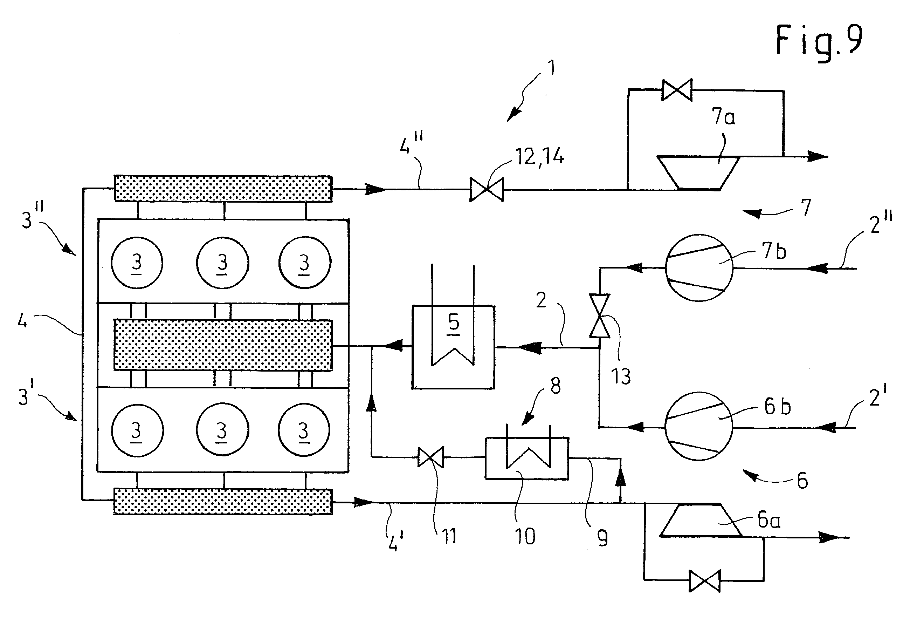

Die Figuren 7, 8 und 9 zeigen schematisch eine siebte, eine achte bzw. eine neunte Ausführungsform der aufgeladenen Brennkraftmaschine 1. Dabei baut die Figur 7 auf der Figur 1, die Figur 8 auf der Figur 2 und die Figur 9 auf der Figur 3 auf. Es sollen nur die Unterschiede zu den in den Figuren 1, 2 und 3 dargestellten Ausführungsformen erörtert werden, weshalb im übrigen bezug genommen wird auf die Figuren 1 ,2 und 3. Für dieselben Bauteile wurden dieselben Bezugszeichen verwendet..

Der Unterschied der Ausführungsformen besteht darin, daß die erste Turbine 6a der Brennkraftmaschine 1 als Waste-Gate-Turbine ausgebildet ist. Die Waste-Gate-Turbine 6a verfügt zum Zwecke einer Abgasabblasung über eine die Turbine 6a umgehende Bypaßleitung, was ein Kennzeichen dieser speziellen Turbinenbauweise ist. Die Turbine 6a wird auf kleine Abgasströme ausgelegt, was die Qualität der Aufladung im Teillastbereich deutlich verbessert. Mit zunehmendem Abgasstrom wird ein größerer Anteil des Abgases über die Bypaßleitung an der Turbine 6a vorbei geführt. Zur Steuerung der Abgasabblasung ist ein Absperrelement in der Bypaßleitung vorgesehen.

**Bezugszeichen**

1     aufgeladene Brennkraftmaschine
2     Gesamtansaugleitung
2'     erste Ansaugleitung
2"     zweite Ansaugleitung
3     Zylinder
3'     erste Zylindergruppe
3"     zweite Zylindergruppe
4     Verbindungsleitung
4'     erste Abgasleitung
4"     zweite Abgasleitung
5     Ladeluftkühler
6     erster Abgasturbolader
6a     erste Turbine
6b     erster Verdichter
7     zweiter Abgasturbolader
7a     zweite Turbine, zuschaltbare Turbine
7b     zweiter Verdichter
8     Abgasrückführung
9     erste Leitung
10     Kühler
11     Absperrelement
12     Mittel zur Aufteilung des Gesamtabgasmassenstroms auf die beiden Turbinen
13     Absperrelement
14     Absperrelement
15     zweite Bypaßleitung
16     Absperrelement

AGR     Abgasrückführung
$m_{AGR}$     Masse an zurückgeführtem Abgas
$m_{Frischluft}$     Masse an zugeführter Frischluft bzw. Verbrennungsluft
VTG     variable Turbinengeometrie
VVG     variable Verdichtergeometrie
$X_{AGR}$     Abgasrückführrate

**Patentansprüche**

1. Aufgeladene Brennkraftmaschine (1) mit mindestens zwei Zylindern (3), die in der Art konfiguriert sind, daß sie zwei Gruppen (3',3") mit jeweils mindestens einem Zylinder (3) bilden und beide Zylindergruppen (3',3") jeweils mit einer separaten Abgasleitung (4',4") ausgestattet sind und beide Abgasleitungen (4',4") miteinander in Verbindung (4) stehen, und mit zwei parallel geschalteten Abgasturboladern (6,7), wobei eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist und die diesen Turbinen (6a,7a) zugeordneten Verdichter (6b,7b) in separaten Ansaugleitungen (2',2") angeordnet sind, die stromabwärts der Verdichter (6b,7b) zu einer Gesamtansaugleitung (2) zusammenlaufen und zur Versorgung der Brennkraftmaschine (1) mit Frischluft bzw. Frischgemisch dienen,
   **dadurch gekennzeichnet, daß**
   eine Leitung (9) zur Abgasrückführung (8) vorgesehen ist, die stromaufwärts einer der beiden Turbinen (6a,7a) aus der dieser Turbine (6a,7a) zugeordneten Abgasleitung (4',4") abzweigt und in die Gesamtansaugleitung (2) mündet, und Mittel (12) vorgesehen sind, mit denen die Größe des durch eine der beiden Turbinen (7a) geführten Abgasmassenstromes steuerbar ist, so daß diese Turbine (7a) als zuschaltbare Turbine (7a) fungiert.

2. Aufgeladene Brennkraftmaschine (1) nach Anspruch 1,
   **dadurch gekennzeichnet, daß**
   die zuschaltbare Turbine (7a) stufenlos zuschaltbar ist.

3. Aufgeladene Brennkraftmaschine (1) nach Anspruch 1 oder 2,
   **dadurch gekennzeichnet, daß**
   das Mittel (12) zur Steuerung des Abgasmassenstroms ein Absperrelement (14), vorzugsweise ein Ventil, ist, das in der der zuschaltbaren Turbine (7a) zugeordneten Abgasleitung (4") angeordnet ist.

4. Aufgeladene Brennkraftmaschine (1) nach Anspruch 3,
   **dadurch gekennzeichnet, daß**
   das Absperrelement (14) zweistufig schaltbar ist in der Art, daß es entweder vollständig geschlossen oder völlig geöffnet ist.

5. Aufgeladene Brennkraftmaschine (1) nach Anspruch 3 oder 4,
   **dadurch gekennzeichnet, daß**
   das Absperrelement (14) in der Abgasleitung (4',4") angeordnet ist, aus der die Leitung (9) zur Abgasrückführung (8) abzweigt und zwar zwischen der dieser Abgasleitung (4',4") zugeordneten Turbine (6a, 7a) und der Leitung (9) zur Abgasrückführung (8).

6. Aufgeladene Brennkraftmaschine (1) nach Anspruch 3 oder 4,
**dadurch gekennzeichnet, daß**
das Absperrelement (14) in der Abgasleitung (4',4") angeordnet ist, die nicht der Abgasrückführung (8) dient, und zwar stromaufwärts der dieser Abgasleitung (4',4") zugeordneten Turbine (6a,7a).

7. Aufgeladene Brennkraftmaschine (1) nach einem der vorherigen Ansprüche,
**dadurch gekennzeichnet, daß**
die erste Turbine (6a) eine variable Turbinengeometrie aufweist.

8. Aufgeladene Brennkraftmaschine (1) nach Anspruch 7,
**dadurch gekennzeichnet, daß**
die erste Turbine (6a) das Mittel (12) zur Steuerung des Abgasmassenstroms bildet, so daß die erste Turbine (6a) die zuschaltbare Turbine bildet, wobei durch Verstellen der Turbine (6a) in Richtung Querschnittsverkleinerung eine Verkleinerung des durch diese Turbine (6a) geführten Abgasmassenstromes realisierbar ist.

9. Aufgeladene Brennkraftmaschine (1) nach einem der Ansprüche 1 bis 6,
**dadurch gekennzeichnet, daß**
die erste Turbine (6a) eine feste, nicht veränderbare Turbinengeometrie aufweist.

10. Aufgeladene Brennkraftmaschine (1) nach einem der Ansprüche 1 bis 6,
**dadurch gekennzeichnet, daß**
die erste Turbine (6a) als Waste-Gate-Turbine ausgeführt ist.

11. Aufgeladene Brennkraftmaschine (1) nach einem der vorherigen Ansprüche,
**dadurch gekennzeichnet, daß**
der der ersten Turbine (6a) zugeordnete erste Verdichter (6b) eine variable Verdichtergeometrie aufweist.

12. Aufgeladene Brennkraftmaschine (1) nach einem der Ansprüche 1 bis 10,
**dadurch gekennzeichnet, daß**
der der ersten Turbine (6a) zugeordnete erste Verdichter (6b) eine feste, nicht veränderbare Verdichtergeometrie aufweist.

13. Aufgeladene Brennkraftmaschine (1) nach einem der vorherigen Ansprüche,
**dadurch gekennzeichnet, daß**
der der ersten Turbine (6a) zugeordnete erste Verdichter (6b) mit einer ersten Bypaßleitung ausgestattet ist, die stromabwärts des ersten Verdichters (6b) aus der ersten Ansaugleitung (2') abzweigt

14. Aufgeladene Brennkraftmaschine (1) nach einem der vorherigen Ansprüche,
**dadurch gekennzeichnet, daß**
die erste Bypaßleitung stromaufwärts des ersten Verdichters (6b) in die erste Ansaugleitung (2') mündet.

15. Aufgeladene Brennkraftmaschine (1) nach einem der vorherigen Ansprüche,
**dadurch gekennzeichnet, daß**
stromabwärts der Verdichter (6b,7b) ein Ladeluftkühler (5) in der Gesamtansaugleitung (2) angeordnet ist.

16. Aufgeladene Brennkraftmaschine (1) nach Anspruch 14,
**dadurch gekennzeichnet, daß**
die Leitung (9) zur Abgasrückführung (8) stromabwärts des Ladeluftkühlers (5) in die Gesamtansaugleitung (2) mündet.

17. Aufgeladene Brennkraftmaschine (1) nach einem der vorherigen Ansprüche,
**dadurch gekennzeichnet, daß**
in der Leitung (9) zur Abgasrückführung (8) ein zusätzlicher Kühler (10) vorgesehen ist.

18. Aufgeladene Brennkraftmaschine (1) nach einem der vorherigen Ansprüche,
**dadurch gekennzeichnet, daß**
in der Leitung (9) zur Abgasrückführung (8) ein Absperrelement (11) vorgesehen ist.

19. Aufgeladene Brennkraftmaschine (1) nach einem der vorherigen Ansprüche,
**dadurch gekennzeichnet, daß**
die zweite Turbine (7a) eine variable Turbinengeometrie aufweist.

20. Aufgeladene Brennkraftmaschine (1) nach Anspruch 19,
**dadurch gekennzeichnet, daß**
die zweite Turbine (7a) das Mittel (12) zur Steuerung des Abgasmassenstroms bildet, so daß die zweite Turbine (7a) die zuschaltbare Turbine (7a) bildet, wobei durch Verstellen der zweiten Turbine (7a) in Richtung Querschnittsverkleinerung eine Verkleinerung des durch die zweite Turbine (7a) geführten Abgasmassenstromes realisierbar ist.

21. Aufgeladene Brennkraftmaschine (1) nach einem der Ansprüche 1 bis 18,

**dadurch gekennzeichnet, daß**
die zweite Turbine (7a) eine feste, nicht veränderbare Turbinengeometrie aufweist.

22. Aufgeladene Brennkraftmaschine (1) nach einem der Ansprüche 1 bis 18,
**dadurch gekennzeichnet, daß**
die zweite Turbine (7a) als Waste-Gate-Turbine ausgeführt ist.

23. Aufgeladene Brennkraftmaschine (1) nach einem der vorherigen Ansprüche,
**dadurch gekennzeichnet, daß**
der der zweiten Turbine (7a) zugeordnete zweite Verdichter (7b) eine variable Verdichtergeometrie aufweist.

24. Aufgeladene Brennkraftmaschine (1) nach einem der Ansprüche 1 bis 22,
**dadurch gekennzeichnet, daß**
der der zweiten Turbine (7a) zugeordnete zweite Verdichter (7b) eine feste, nicht veränderbare Verdichtergeometrie aufweist.

25. Aufgeladene Brennkraftmaschine (1) nach einem der vorherigen Ansprüche,
**dadurch gekennzeichnet, daß**
der der zweiten Turbine (7a) zugeordnete zweite Verdichter (7b) mit einer zweiten Bypaßleitung (15) ausgestattet ist, die stromabwärts des zweiten Verdichters (7b) aus der zweiten Ansaugleitung (2") abzweigt.

26. Aufgeladene Brennkraftmaschine (1) nach Anspruch 25,
**dadurch gekennzeichnet, daß**
die zweite Bypaßleitung (15) stromaufwärts des zweiten Verdichters (7b) in die zweite Ansaugleitung (2") mündet.

27. Aufgeladene Brennkraftmaschine (1) nach einem der vorherigen Ansprüche,
**dadurch gekennzeichnet, daß**
stromabwärts des der zuschaltbaren Turbine (7a) zugeordneten Verdichters (7b) ein Absperrelement in der diesem Verdichter (7b) zugeordneten Ansaugleitung (2") vorgesehen ist.

28. Verfahren zum Betreiben einer aufgeladenen Brennkraftmaschine (1) nach einem der vorherigen Ansprüche,
**dadurch gekennzeichnet, daß**

■ bei niedrigen Drehzahlen bzw. kleinen Abgasmengen die zur Steuerung des durch die zuschaltbare Turbine (7a) geführten Abgasmassenstromes vorgesehenen Mittel (12) in der Art gesteuert werden, daß der wesentliche Anteil des Abgases oder das gesamte Abgas durch die andere Turbine (6a) geführt wird d.h. der durch die andere Turbine (6a) geleitete Abgasmassenstrom größer ist als der durch die zuschaltbare Turbine (7a) geleitete Abgasmassenstrom, und
■ mit zunehmender Drehzahl bzw. zunehmender Abgasmenge die zur Steuerung des durch die zuschaltbare Turbine (7a) geführten Abgasmassenstromes vorgesehenen Mittel (12) in der Art gesteuert werden, daß mehr Abgas durch die zuschaltbare Turbine (7a) geführt wird.

29. Verfahren nach Anspruch 28 zum Betreiben einer aufgeladenen Brennkraftmaschine (1) nach Anspruch 4,
**dadurch gekennzeichnet, daß**

■ bei niedrigen Drehzahlen bzw. kleinen Abgasmengen das Absperrelement (14) vollständig geschlossen wird, so daß kein Abgas durch die zuschaltbare Turbine (7a) geleitet wird und das gesamte Abgas durch die andere Turbine (6a) geführt wird, und
■ bei hohen Drehzahlen bzw. großen Abgasmengen das Absperrelement (14) vollständig geöffnet wird, so daß das Abgas durch beide Turbinen (6a,7a) geführt wird.

30. Verfahren nach Anspruch 28 zum Betreiben einer aufgeladenen Brennkraftmaschine (1) nach einem der vorherigen Ansprüche, bei der die zuschaltbare Turbine (7a) eine variable Turbinengeometrie aufweist und das Mittel (12) zur Steuerung des Abgasmassenstroms bildet,
**dadurch gekennzeichnet, daß**

■ bei niedrigen Drehzahlen bzw. kleinen Abgasmengen die Geometrie der zuschaltbaren Turbine (7a) in der Art verstellt wird, daß diese Turbine (7a) ihren kleinsten Strömungsquerschnitt aufweist, und
■ mit zunehmender Drehzahl bzw. zunehmenden Abgasmengen die Geometrie der zuschaltbaren Turbine (7a) in Richtung Querschnittvergrößerung verstellt wird, so daß der durch diese Turbine (7a) geleitete Abgasmassenstrom zunimmt.

31. Verfahren nach einem der Ansprüche 28 bis 30 zum Betreiben einer aufgeladenen Brennkraftmaschine (1), bei der stromabwärts des der zuschaltbaren Turbine (7a) zugeordneten Verdichters (7b) ein Absperrelement (13) in der diesem Verdichter (7b) zugeordneten Ansaugleitung (2") vorgesehen ist,
**dadurch gekennzeichnet, daß**
das Absperrelement (13) vollständig geschlossen wird, wenn das gesamte Abgas oder mehr als 80% des Abgases durch die andere Turbine (6a) geleitet wird.

**32.** Verfahren nach Anspruch 31,
**dadurch gekennzeichnet, daß**
das Absperrelement (13) vollständig geöffnet wird, wenn das Abgas durch beide Turbinen (6a,7a) geleitet wird und mindestens 20% des Abgases durch die zuschaltbare Turbine (7a) geführt wird.

**33.** Verfahren nach Anspruch 31 oder 32 zum Betreiben einer aufgeladenen Brennkraftmaschine (1), bei der der Verdichter (7b), der der zuschaltbaren Turbine (7a) zugeordnet ist, mit einer Bypaßleitung (15) ausgestattet ist, die stromabwärts des Verdichters (7b) aus der diesem Verdichter (7b) zugeordneten Ansaugleitung (2") abzweigt,
**dadurch gekennzeichnet, daß**
der durch diesen Verdichter (7b) geführte Frischluftmassenstrom weitestgehend abgeblasen wird, wenn das Absperrelement (13) vollständig geschlossen ist.

**Geänderte Patentansprüche gemäss Regel 86(2) EPÜ.**

**1.** Aufgeladene Brennkraftmaschine (1) mit mindestens zwei Zylindern (3), die in der Art konfiguriert sind, daß sie zwei Gruppen (3',3") mit jeweils mindestens einem Zylinder (3) bilden und beide Zylindergruppen (3',3") jeweils mit einer separaten Abgasleitung (4',4") ausgestattet sind und beide Abgasleitungen (4',4") miteinander in Verbindung (4) stehen, und mit zwei parallel geschalteten Abgasturboladern (6,7), wobei eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist und die diesen Turbinen (6a,7a) zugeordneten Verdichter (6b,7b) in separaten Ansaugleitungen (2',2") angeordnet sind, die stromabwärts der Verdichter (6b,7b) zu einer Gesamtansaugleitung (2) zusammenlaufen und zur Versorgung der Brennkraftmaschine (1) mit Frischluft bzw. Frischgemisch dienen,
**dadurch gekennzeichnet, dass**

■ eine Leitung (9) zur Abgasrückführung (8) vorgesehen ist, die stromaufwärts einer der beiden Turbinen (6a,7a) aus der dieser Turbine (6a,7a) zugeordneten Abgasleitung (4',4") abzweigt und in die Gesamtansaugleitung (2) mündet,
■ Mittel (12) vorgesehen sind, mit denen die Größe des durch eine der beiden Turbinen (7a) geführten Abgasmassenstromes steuerbar ist, so daß diese Turbine (7a) als zuschaltbare Turbine (7a) fungiert,
■ stromabwärts des der zuschaltbaren Turbine (7a) zugeordneten Verdichters (7b) ein Absperrelement (13) in der diesem Verdichter (7b) zugeordneten Ansaugleitung (2") angeordnet ist, und
■ eine Bypassleitung (15) stromabwärts des Verdichters (7b) und stromaufwärts des Absperrelementes (13) aus der diesem Verdichter (7b) zugeordneten Ansaugleitung (2") abzweigt, wobei in der Bypassleitung (15) zur Steuerung der abgeblasenen Frischluftmenge ein Absperrelement (16) angeordnet ist.

Fig.1

Fig.2

EP 1 640 595 A1

Fig.3

EP 1 640 595 A1

Fig.4

EP 1 640 595 A1

Fig.5

EP 1 640 595 A1

Fig.6

Fig.7

Fig.8

EP 1 640 595 A1

Fig.9

EP 1 640 595 A1

**Europäisches Patentamt**

**EUROPÄISCHER RECHERCHENBERICHT**

Nummer der Anmeldung

EP 04 10 4583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 302 646 A (NISSAN MOTOR COMPANY LTD) 16. April 2003 (2003-04-16) <br><br> * Zusammenfassung; Abbildungen * <br> * Seite 4, Absatz 46 - Seite 5, Absatz 56 * <br> * Seite 5, Absatz 59 * | 1-10,12, 15-22, 24,27-32 | F02M25/07 <br> F02B37/007 <br> F02B37/24 <br> F02B37/18 <br> F02B37/22 <br> F02B37/16 <br> F02D9/02 |
| A | * Seite 9, Absatz 82 - Seite 12, Absatz 112 * | 11,13, 14,23, 25,26,33 | |
| | ----- | | |
| X | EP 1 316 698 A (RENAULT S.A.S) 4. Juni 2003 (2003-06-04) | 1-5,9, 12,15, 16,18, 21,24, 25, 27-29, 31,32 | |
| Y | * Zusammenfassung; Abbildung * | 11,13, 14,23, 26,33 | RECHERCHIERTE SACHGEBIETE (Int.Cl.7) |
| A | * Spalte 3, Absatz 19 - Spalte 5, Absatz 26 * | 6-8,10, 17,19, 20,22,30 | F02M <br> F02B <br> F02D <br> F01N |
| | ----- | | |
| Y | US 2002/116926 A1 (SUMSER SIEGFRIED ET AL) 29. August 2002 (2002-08-29) * Zusammenfassung; Abbildungen * | 11,23 | |
| A | * Seite 2, Absatz 19 - Absatz 25 * | 1-10, 12-22, 24-33 | |
| | ----- <br> -/-- | | |

Der vorliegende Recherchenbericht wurde für alle Patentansprüche erstellt

| Recherchenort | Abschlußdatum der Recherche | Prüfer |
|---|---|---|
| Den Haag | 2. März 2005 | Döring, M |

EPO FORM 1503 03.82 (P04C03)

Europäisches
Patentamt

**EUROPÄISCHER RECHERCHENBERICHT**

Nummer der Anmeldung

EP 04 10 4583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | WO 2004/046519 A (HONEYWELL INT INC; WATKIN, KEN ET AL) 3. Juni 2004 (2004-06-03) * Zusammenfassung; Abbildungen * | 13,14, 26,33 | |
| A | * Seite 3, Zeile 13 - Seite 8, Zeile 24 * | 1-12, 15-25, 27-32 | |
| X | US 4 249 382 A (EVANS DUANE E ET AL) 10. Februar 1981 (1981-02-10) * Zusammenfassung; Abbildungen * | 1,3-5,9, 17,21,24 | |
| A | * Spalte 4, Zeile 29 - Spalte 5, Zeile 44 * | 2,6-8, 10-16, 18-20, 22,23, 25-33 | |
| A | PATENT ABSTRACTS OF JAPAN Bd. 017, Nr. 271 (M-1417), 26. Mai 1993 (1993-05-26) -& JP 05 005419 A (ISUZU MOTORS LTD), 14. Januar 1993 (1993-01-14) * Zusammenfassung; Abbildungen * | 1-33 | RECHERCHIERTE SACHGEBIETE (Int.Cl.7) |
| A | EP 1 375 868 A (BORG WARNER INC) 2. Januar 2004 (2004-01-02) * Zusammenfassung; Abbildungen * * Spalte 5, Absatz 22 - Spalte 10, Absatz 48 * | 1-33 | |
| A | US 6 079 211 A (WOOLLENWEBER WILLIAM E; HALIMI EDWARD M) 27. Juni 2000 (2000-06-27) * Zusammenfassung; Abbildungen * * Spalte 7, Zeile 31 - Spalte 8, Zeile 22 * | 1-33 | |

-/--

Der vorliegende Recherchenbericht wurde für alle Patentansprüche erstellt

| Recherchenort | Abschlußdatum der Recherche | Prüfer |
|---|---|---|
| Den Haag | 2. März 2005 | Döring, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
   Dokument

EPO FORM 1503 03.82 (P04C03)

**EP 1 640 595 A1**

**Europäisches Patentamt**

**EUROPÄISCHER RECHERCHENBERICHT**

Nummer der Anmeldung

EP 04 10 4583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 1 400 667 A (DR.ING. H.C.F. PORSCHE AG) 24. März 2004 (2004-03-24) * Zusammenfassung; Abbildungen * * Spalte 3, Absatz 15 - Spalte 6, Absatz 20 * ----- | 1-33 | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| Den Haag | 2. März 2005 | Döring, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes Dokument

EPO FORM 1503 03.82 (P04C03)

27

**ANHANG ZUM EUROPÄISCHEN RECHERCHENBERICHT
ÜBER DIE EUROPÄISCHE PATENTANMELDUNG NR.**

EP 04 10 4583

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 1302646 | A | 16-04-2003 | JP | 2003120354 A | 23-04-2003 |
| | | | EP | 1302646 A2 | 16-04-2003 |
| | | | US | 2003088357 A1 | 08-05-2003 |
| EP 1316698 | A | 04-06-2003 | FR | 2832759 A1 | 30-05-2003 |
| | | | EP | 1316698 A1 | 04-06-2003 |
| US 2002116926 | A1 | 29-08-2002 | DE | 10049198 A1 | 11-04-2002 |
| | | | FR | 2815081 A1 | 12-04-2002 |
| WO 2004046519 | A | 03-06-2004 | WO | 2004046519 A1 | 03-06-2004 |
| | | | EP | 1472444 A1 | 03-11-2004 |
| US 4249382 | A | 10-02-1981 | SE | 8000465 A | 21-01-1980 |
| JP 05005419 | A | 14-01-1993 | KEINE | | |
| EP 1375868 | A | 02-01-2004 | EP | 1375868 A1 | 02-01-2004 |
| | | | BR | 0301766 A | 24-08-2004 |
| | | | JP | 2004028104 A | 29-01-2004 |
| | | | US | 2004134193 A1 | 15-07-2004 |
| US 6079211 | A | 27-06-2000 | AU | 8669298 A | 08-03-1999 |
| | | | WO | 9909309 A1 | 25-02-1999 |
| EP 1400667 | A | 24-03-2004 | DE | 10243473 A1 | 25-03-2004 |
| | | | EP | 1400667 A2 | 24-03-2004 |

EPO FORM P0461

Für nähere Einzelheiten zu diesem Anhang : siehe Amtsblatt des Europäischen Patentamts, Nr.12/82